# EUROPÄISCHE PATENTANMELDUNG

(11) **EP 4 614 017 A1**
(43) Veröffentlichungstag der Anmeldung: **10.09.2025**
(21) Anmeldenummer: 25161385.7
(22) Anmeldetag: 03.03.2025
(51) Int. Cl.: F16C 29/12, B65G 54/02

(54) **TRANSPORTSYSTEM**

(30) Priorität: 05.03.2024 DE 102024106295
(71) Anmelder: Weiss GmbH, 74722 Buchen (Odw.) (DE)
(72) Erfinder: Götzinger, Martin, 74722 Buchen (DE)
(74) Vertreter: Manitz Finsterwald Patent- und Rechtsanwaltspartnerschaft mbB

(57) **Zusammenfassung**

Ein Transportsystem zum Transport von Objekten mit zumindest einer Transportschiene, die zumindest eine erste und eine zweite Lauffläche aufweist, die einander gegenüberliegend angeordnet sind, und mit zumindest einem Transportwagen. Er umfasst einen Grundkörper mit einer Kopplungsfläche, die mit einem Objektträger gekoppelt ist, zumindest eine um eine erste Drehachse drehbar gelagerte erste Laufrolle und zumindest eine um eine zweite Drehachse drehbar gelagerte zweite Laufrolle, wobei die erste und die zweite Drehachse relativ zu dem Grundkörper ortsfest sind. Die Laufrollen wirken mit der ersten Lauffläche zusammen. Die erste und die zweite Drehachse definieren eine senkrecht zu einer Transportrichtung stehende axiale Richtung. Ferner ist zumindest eine um eine dritte Drehachse drehbar gelagerte dritte Laufrolle an einem Ausleger angeordnet, der einen mit dem Grundkörper verbundenen Basisabschnitt, ein sich daran anschließendes elastisch wirkendes Festkörpergelenk und einen sich wiederum daran anschließenden Endabschnitt aufweist. Die dritte Laufrolle ist an dem Endabschnitt angeordnet und das Festkörpergelenk weist zumindest in der Transportrichtung eine geringere Biegesteifigkeit als der Basisabschnitt und/oder der Endabschnitt auf. Der Ausleger ist derart ausgestaltet und angeordnet, dass die dritte Laufrolle mit einer Vorspannung gegen die zweite Lauffläche gedrückt wird.

## Beschreibung

Die Erfindung betrifft ein Transportsystem zum Transport von Objekten.

Transportwagen und entsprechende Transportsysteme werden beispielsweise in der Automatisierungstechnik verwendet, um Objekte von einem Ort zu einem anderen Ort zu transportieren, beispielsweise von einem Fertigungsschritt zum nächsten. Hierzu werden die Objekte auf Transportwagen positioniert und die Transportwagen werden entlang einer Schiene verfahren. Die Schiene kann dabei geradlinige und/oder gekrümmte Abschnitte aufweisen.

In der Praxis wird besonders auf die Kurvengängigkeit des Systems Wert gelegt, da nicht kurvengängige Systeme diskontinuierlich arbeiten und ihre Taktraten limitiert sind. Des Weiteren sollten die Schienensysteme zugleich eine hohe Tragfähigkeit sowie eine gute Profilgenauigkeit aufweisen, um sowohl hohe Lasten transportieren zu können als auch eine hohe Genauigkeit in der Positionierung der Transportwagen und geringe Geräuschentwicklung beim Transport zu gewährleisten.

Von wesentlicher Bedeutung ist es außerdem, dass die Transportwagen bzw. die Transportsysteme zuverlässig arbeiten und dennoch kostengünstig in der Herstellung und der Montage sind.

Es ist daher eine Aufgabe der Erfindung, ein Transportsystem bereitzustellen, das alle der oben genannten Anforderungen erfüllt.

Diese Aufgabe wird durch ein Transportsystem gemäß Anspruch 1 gelöst.

Ein erfindungsgemäßes Transportsystem umfasst zumindest eine Transportschiene, die zumindest eine erste Lauffläche und eine zweite Lauffläche aufweist, die einander gegenüberliegend angeordnet sind, und mit zumindest einem Transportwagen. Der Transportwagen umfasst einen Grundkörper mit einer Kopplungsfläche, die mit einem Objektträger zur Aufnahme zumindest eines zu transportierenden Objekts gekoppelt oder koppelbar ist. Der Objektträger kann auch integral mit dem Grundkörper ausgebildet sein.

In der Regel sind mehrere Transportwagen vorgesehen, die bevorzugt individuell ansteuerbar sind, sodass sie unabhängig voneinander entlang der Transportschiene bewegt werden können.

Der Transportwagen umfasst zumindest eine um eine erste Drehachse drehbar gelagerte erste Laufrolle und zumindest eine um eine zweite Drehachse drehbar gelagerte zweite Laufrolle. Die erste und die zweite Laufrolle sind derart an dem Grundkörper angeordnet, dass die erste und die zweite Drehachse relativ zu dem Grundkörper ortsfest sind und dass sie mit der ersten Lauffläche zusammenwirken. Die erste und die zweite Drehachse definieren eine axiale Richtung, die senkrecht zu einer Transportrichtung des Transportwagens steht. Es ist denkbar, dass weitere ortsfeste Laufrollen vorgesehen sind.

Der Transportwagen umfasst des Weiteren zumindest eine um eine dritte Drehachse drehbar gelagerte dritte Laufrolle, die an einem Ausleger angeordnet ist, der einen mit dem Grundkörper verbundenen Basisabschnitt, ein sich an den Basisabschnitt anschließendes elastisch wirkendes Festkörpergelenk und einen sich an das Festkörpergelenk anschließenden Endabschnitt aufweist. Die dritte Laufrolle ist an dem Endabschnitt angeordnet.

Das Festkörpergelenk weist zumindest in der Transportrichtung eine geringere Biegesteifigkeit als der Basisabschnitt und/oder der Endabschnitt auf. Die geringere Biegesteifigkeit ist derart, dass sich das Festkörpergelenk in der Transportrichtung leichter elastisch verformen lässt als der Basisabschnitt und/oder der Endabschnitt. Oder anders gesagt: Das Festkörpergelenk ist leichter verbiegbar als der Basisabschnitt und/oder der Endabschnitt, um bei externer Krafteinwirkung ein Ausschwenken des Endabschnitts zu ermöglichen. Die Kraft wirkt dabei in der Regel auf die dritte Laufrolle, so dass sich von anderen Laufrollen entfernt.

Der Ausleger, insbesondere das Festkörpergelenk, ist derart ausgestaltet und angeordnet, dass die dritte Laufrolle mit einer Vorspannung gegen die zweite Lauffläche gedrückt wird.

Es können weitere Laufrollen vorhanden sein, die an einem Ausleger der vorstehend beschriebenen Art angeordnet sind. Grundsätzlich können auch mehrere Ausleger vorgesehen sein. Einem Ausleger können zwei oder mehr Laufrollen zugeordnet sein, bevorzugt jedoch genau eine.

Grundsätzlich können die Anzahl der ortfesten Laufrollen (jedoch mindestens 2) und die Anzahl der an einem Ausleger angeordneten Laufrollen bedarfsgerecht gewählt werden, beispielsweise um die bei Betrieb des Systems auftreten-den Belastungen zuverlässig aufnehmen zu können.

In vielen Systemen variiert die Breite der Transportschiene in deren Verlauf. Insbesondere in einem Übergang von einem geradlinigen Transportabschnitt in einen Kurvenabschnitt mit konstantem Radius kann es zu einer Veränderung der Schienenbreite kommen. In diesem Übergang hat die Transportschiene einen Verlauf, der durch eine oder mehrere Funktionen (z.B. Polynome) beschrieben wird, die im Rahmen aufwendiger Optimierungsprozesse berechnet werden. Die beiden Seiten der Schiene können durch unterschiedliche Funktionen beschrieben werden, so dass deren Verlauf nicht notwendigerweise parallel ist.

Aufgrund der Lagerung der dritten Laufrolle an dem Ausleger ist ein Abstand zwischen der dritten Laufrolle einerseits und der ersten und der zweiten Laufrolle andererseits veränderbar, während der Abstand zwischen der ersten und der zweiten Laufrolle konstant ist. Durch die nicht-ortsfeste Lagerung der dritten Laufrolle können die Variationen der Schienenbreite und/oder Toleranzen zuverlässig aufgenommen werden. Durch die Vorspannkraft wird sichergestellt, dass die dritte Laufrolle stets mit hinreichend großer Kraft gegen die Schiene gepresst wird. Letztlich hat dies zur Folge, dass auch die erste und zweite Laufrolle zuverlässigen Kontakt mit der Transportschiene haben. Dabei wird angestrebt, dass kein Schlupf zwischen den Laufrollen und der Transportschiene auftritt.

Mit anderen Worten wirkt der Ausleger wie eine Art vorgespannte Feder, die elastisch im Bereich des Festkörpergelenks, insbesondere nur im Bereich des Festkörpergelenks verformbar ist. Die Kundenschnittstelle in Form des Objektträgers ist dabei von der Bewegung/Verformung des Auslegers entkoppelt.

Die bewegliche Lagerung der dritten Laufrolle an dem Ausleger mit Festkörpergelenk hat beispielsweise gegenüber einer Lagerung an einem Schwenkarm den Vorteil, dass keine zusätzlichen beweglichen Teile wie Scharniere, Federelemente oder dergleichen benötigt werden. Der erfindungsgemäße Ausleger zeichnet sich daher durch eine verringerte Komplexität aus, weshalb er vergleichsweise einfach herzustellen und wirtschaftlich ist. Insbesondere tritt praktisch kein Verschließ im Festkörpergelenk auf und die Gefahr von Fehlfunktionen ist ganz erheblich reduziert, was den Ausleger besonders robust und wartungsfreundlich macht.

Der Begriff Lauffläche ist im Kontext der vorliegenden Erfindung breit zu verstehen. Neben ebenen Flächen umfasst er auch Flächen mit komplexerer Geometrie.

Derartige Laufflächen können Teilflächen umfassen, die geneigt zueinander angeordnet sind, wie etwa Laufflächen mit in einem Querschnitt keilförmiger Formgebung.

Weitere Ausführungsformen der Erfindung sind in den Ansprüchen, der Beschreibung und den beigefügten Zeichnungen angegeben.

Gemäß einer Ausführungsform weist das Festkörpergelenk in der Transportrichtung eine erste Biegesteifigkeit und in der axialen Richtung eine zweite Biegesteifigkeit auf, wobei die erste Biegesteifigkeit kleiner als die zweite Biegesteifigkeit ist. Das heißt das Festkörpergelenk lässt sich bei einer Krafteinwirkung auf eben diese in der Transportrichtung leichter verbiegen als bei einer Krafteinwirkung auf das Gelenk in der axialen Richtung, wobei eine Querrichtung, die senkrecht zu der Transportrichtung und senkrecht zu der axialen Richtung steht, dabei jeweils die Biegeachse darstellt.

Gemäß einer Ausführungsform weist das Festkörpergelenk in der axialen Richtung eine erste Federrate und in der Transportrichtung eine zweite Federrate auf, wobei die erste Federrate größer als die zweite Federrate ist. Die erste und zweite Federrate können bei einer eingeleiteten Kraft von 100 N am endabschnittnahen Ende des Festkörpergelenks gemessen sein. Die erste Federrate kann mehr als 150%, insbesondere mehr als 250%, insbesondere mehr als 500% der zweiten Federrate betragen.

Gemäß einer Ausführungsform resultiert eine Krafteinwirkung oder Krafteinleitung auf die dritte Laufrolle in einer Querrichtung, die senkrecht zu der Transportrichtung und senkrecht zu der axialen Richtung steht, in einer ersten Auslenkung der dritten Laufrolle in der Querrichtung und in einer zweiten Auslenkung der dritten Laufrolle in der axialen Richtung, wobei die erste Auslenkung größer als die zweite Auslenkung ist. Die erste Auslenkung kann mehr als 250%, insbesondere mehr als 500%, insbesondere mehr als 750%, insbesondere mehr als 1000%, insbesondere mehr als 1500% der zweiten Auslenkung betragen.

Ein Beispiel: Man nehme an, die erste Federrate beträgt etwa 10500 N/mm und die zweite Federrate etwa 6900 N/mm. Bei einer eingeleiteten Kraft von 100 N auf die dritte Laufrolle in der Querrichtung beträgt die erste Auslenkung 34 µm und die zweite Auslenkung 7 µm. Mit anderen Worten kann der Ausleger bei einer Krafteinwirkung in der Querrichtung auf die dritte Laufrolle, welche beispielsweise aus einer unregelmäßigen Schienenbreite resultiert, in der axialen Richtung mehr als 4-mal weniger ausgelenkt werden als in der Querrichtung. Das heißt der Ausleger kann dazu ausgebildet sein, um eine Auslenkung der dritten Laufrolle in Bezug auf den Grundkörper in einer Richtung senkrecht zu der axialen Richtung zu ermöglichen und um eine Verkippung der dritten Laufrolle relativ zu der axialen Richtung im Wesentlichen zu verhindern, obwohl die Kraft (insbesondere die Vorspannkraft der dritten Laufrolle) unterhalb des Auslegers ansetzt. Die Verkippung kann weniger als 0,01° betragen.

Die in dem Beispiel angegebenen Zahlenwerte weisen Toleranzen von +/- 10% auf. Es versteht sich, dass die Biegesteifigkeiten bzw. Federraten bedarfsgerecht an die jeweils vorliegenden Bedingungen angepasst werden können.

Eine Ausführungsform sieht es vor, dass sich der Endabschnitt im Wesentlichen parallel zu der Transportrichtung erstreckt.

Gemäß einer Ausführungsform erstreckt sich das Festkörpergelenk im Wesentlichen in einer Richtung senkrecht zu der Transportrichtung und senkrecht zu der axialen Richtung. Mit anderen Worten können die Längsachsen des Festkörpergelenks und des Endabschnitts im Wesentlichen einen rechten Winkel bilden.

Gemäß einer Ausführungsform ist der Basisabschnitt in einer Richtung senkrecht zu der Transportrichtung und senkrecht zu der axialen Richtung seitlich versetzt in Bezug auf die dritte Laufrolle angeordnet.

Gemäß einer Ausführungsform weist der Basisabschnitt eine Breite in der Transportrichtung und eine Dicke in der axialen Richtung auf, das Festkörpergelenk weist eine Breite in der Transportrichtung und eine Dicke in der axialen Richtung auf und der Endabschnitt weist eine Breite in einer Richtung senkrecht zu der axialen Richtung und der Transportrichtung und eine Dicke in der axialen Richtung auf, wobei das Festkörpergelenk zumindest abschnittsweise eine kleinere Breite und/oder Dicke als der Basisabschnitt und/oder der Endabschnitt aufweist. Mit anderen Worten ist das Festkörpergelenk zumindest abschnittsweise schmaler und/oder dünner als der Basisabschnitt und/oder der Endabschnitt. Die Breite des Festkörpergelenks kann zum Beispiel weniger als 90%, insbesondere weniger als 80%, insbesondere weniger als 70%, insbesondere weniger als 50% der Breite des Basisabschnitts und/oder des Endabschnitts sein. Die Dicke des Festkörpergelenks kann zum Beispiel weniger als 90%, insbesondere weniger als 80%, insbesondere weniger als 70% der Dicke des Basisabschnitts und/oder des Endabschnitts sein. Das Festkörpergelenk kann aber auch die selbe Dicke wie der Basisabschnitt und/oder der Endabschnitt aufweisen.

Gemäß einer Ausführungsform umfasst das Festkörpergelenk zwei Seitenflächen, wobei zumindest eine, bevorzugt beide, der Seitenflächen in Bezug auf die axiale Richtung geneigt ist. Insbesondere kann das Festkörpergelenk in einem Querschnitt in einer Ebene, die durch die Transportrichtung und die axiale Richtung aufgespannt wird, zumindest abschnittsweise die Form eines geneigten Parallelogramms aufweisen. Ein Neigungswinkel der Seitenfläche in Bezug auf die axiale Richtung kann zum Beispiel zwischen 45° und 5°, insbesondere zwischen 40° und 20°, insbesondere zwischen 35° und 15°, insbesondere zwischen 30° und 20°, liegen. Dadurch werden alle drei Drehachsen bei einer Auslenkung der dritten Laufrolle in Querrichtung im Wesentlichen parallel gehalten.

Gemäß einer Ausführungsform weist zumindest das Festkörpergelenk zumindest eine Ausnehmung auf. Bevorzugt ist diese an einer Seitenfläche des Festkörpergelenks ausgebildet, wobei sich die Ausnehmung zumindest abschnittsweise, bevorzugt vollständig, entlang der Seitenfläche erstreckt. Insbesondere kann jede Seitenfläche zwei parallele, zueinander beabstandete Ausnehmungen aufweisen, die sich jeweils vollständig entlang der jeweiligen Seitenfläche erstrecken. Beispielsweise können gegenüberliegende Ausnehmungen auf beiden Seitenflächen ausgebildet sein, sodass zumindest eine Einschnürung gebildet wird. Bevorzugt werden zwei Einschnürungen gebildet.

Gemäß einer Ausführungsform weist der Ausleger eine dem Objekt zugewandte Gelenkfläche auf. Bevorzugt weisen die Abschnitte des Auslegers eine gemeinsame, dem Objekt zugewandte Gelenkfläche auf. Die Gelenkfläche und die Kopplungsfläche sind parallele Ebenen oder liegen in derselben Ebene. Insbesondere liegt in einer Gebrauchslage des Transportwagens in einer Richtung senkrecht zu der axialen Richtung gesehen die Gelenkfläche unterhalb der Kopplungsfläche, das heißt der Ausleger ist in Bezug auf den Grundkörper abgesetzt. Mit anderen Worten liegt die Oberfläche des Auslegers von der Seite betrachtet tiefer als die Kopplungsfläche des Grundkörpers, wodurch ein Zusammenwirken zwischen einem montierten Objekt und dem Ausleger vermieden werden kann, insbesondere auch bei einer Auslenkung der dritten Laufrolle.

Eine Ausführungsform sieht es vor, dass die dritte Drehachse seitlich versetzt in Bezug auf eine Mittenachse des Endabschnitts an dem Endabschnitt angeordnet ist. Dies macht den Transportwagen kompakter und wirkt sich positiv auf die Kippsteifigkeit der dritten Laufrolle aus.

Gemäß einer Ausführungsform ist der Ausleger einstückig ausgebildet. Dadurch werden keine zusätzlichen mechanischen Teile für die Lagerung der dritten Laufrolle benötigt, was die Komplexität und somit die Kosten des Systems senkt. Es ist auch möglich, dass das Festkörpergelenk einstückig mit dem Basisabschnitt oder einstückig mit dem Endabschnitt ausgebildet ist.

Alternativ oder zusätzlich ist eine zwei- oder mehrstückige Ausgestaltung des Festkörpergelenks denkbar.

Gemäß einer Ausführungsform sind der Ausleger und der Grundkörper einstückig ausgebildet sind, was den Transportwagen besonders wirtschaftlich und robust macht. Der Ausleger und der Grundkörper sind beispielsweise durch Fräsen herstellbar. Alternativ können der Ausleger und der Grundkörper aber auch mehrstückig ausgebildet sein. Beispielsweise kann ein sich an den Grundkörper anschließendes Zwischenelement vorgesehen sein, das den Grundkörper und den Ausleger verbindet.

Gemäß einer Ausführungsform bilden die Drehachsen der Laufrollen in der axialen Richtung gesehen ein gleichschenkliges Dreieck, wenn sich der Transportwagen nicht auf der Transportschiene befindet. Dadurch wird eine symmetrische Giersteifigkeit beim Bewegen des Transportwagens entlang der Transportschiene erzielt.

Gemäß einer Ausführungsform erstreckt sich von dem Grundkörper zumindest ein Trägerabschnitt in der axialen Richtung, der zumindest eine um eine vierte Drehachse drehbar gelagerte vierte Laufrolle trägt. Die vierte Laufrolle kann an einem freien Ende des Trägerabschnitts angeordnet sein. Die vierte Laufrolle kann einen kleineren Durchmesser als die erste, die zweite und/oder die dritte Laufrolle aufweisen.

Gemäß einer Ausführungsform ist die vierte Drehachse parallel zu der der ersten, der zweiten und/oder der dritten Drehachse angeordnet.

Gemäß einer Ausführungsform umfasst das Transportsystem ferner eine dritte Lauffläche, die an einer von der Transportschiene beabstandeten Stützschiene ausgebildet ist, wobei die vierte Laufrolle derart an dem Trägerabschnitt gelagert ist, dass sie mit der dritten Lauffläche zusammenwirkt. Dadurch wird ein definierter Abstand zwischen einer Läufereinheit des Transportwagens und einer Statoreinheit der Transportschiene hergestellt.

Gemäß einer Ausführungsform sind der Transportschiene eine Mehrzahl von in der Transportrichtung hintereinander angeordneten Statoreinheiten zugeordnet, die zusammen mit einer an dem zumindest einen Transportwagen angeordneten Läufereinheit einen Linearmotor bilden, mittels dem der zumindest eine Transportwagen entlang der Transportschiene bewegbar ist, insbesondere wobei die Läufereinheit an dem Trägerabschnitt angeordnet ist, insbesondere wobei die Läufereinheit zwischen dem Grundkörper und der vierten Laufrolle angeordnet ist.

Gemäß einer Ausführungsform erstrecken sich zwei Ausleger von dem Grundkörper, die jeweils einen Endabschnitt mit einer dritten Laufrolle aufweisen. Dadurch kann der Transportwagen für größere zu transportierende Lasten ausgelegt werden. Die zwei Festkörpergelenke der zwei Ausleger können parallel zueinander angeordnet sein und/oder die zwei Endabschnitte der zwei Ausleger können fluchten. Die beiden Ausleger können jeweils gemäß zumindest einer der oben beschriebenen Ausführungsformen ausgebildet sein.

Nachfolgend wird die vorliegende Erfindung beispielhaft anhand vorteilhafter Ausführungsformen unter Bezugnahme auf die beigefügten Zeichnungen erläutert. Es zeigen:
- Fig. 1: eine vereinfachte, perspektivische Ansicht eines Ausschnitts eines Transportsystems,
- Fig. 2: eine Draufsicht auf das Transportsystem (vereinfachte Ansicht),
- Fig. 3: eine perspektivische Ansicht eines Ausschnitts eines Transportsystems,
- Fig. 4: eine Seitenansicht eines Transportwagens,
- Fig. 5: eine Perspektivansicht des Transportwagens von Fig. 4,
- Fig. 6A: eine Draufsicht auf den Transportwagen von Fig. 4,
- Fig. 6B: eine schematische Darstellung der Anordnung der Drehachsen,
- Fig. 6C: eine Detailansicht des Auslegers,
- Fig. 7A: eine Schnittansicht des Transportwagens entlang der in Fig. 6A eingezeichneten Schnittlinie B-B,
- Fig. 7B: eine schematische Darstellung der Querschnittsform des Festkörpergelenks,
- Fig. 8: eine Perspektivansicht eines Abschnitts eines Transportwagens, und
- Fig. 9: eine Seitenansicht des Transportwagens von Fig. 8.

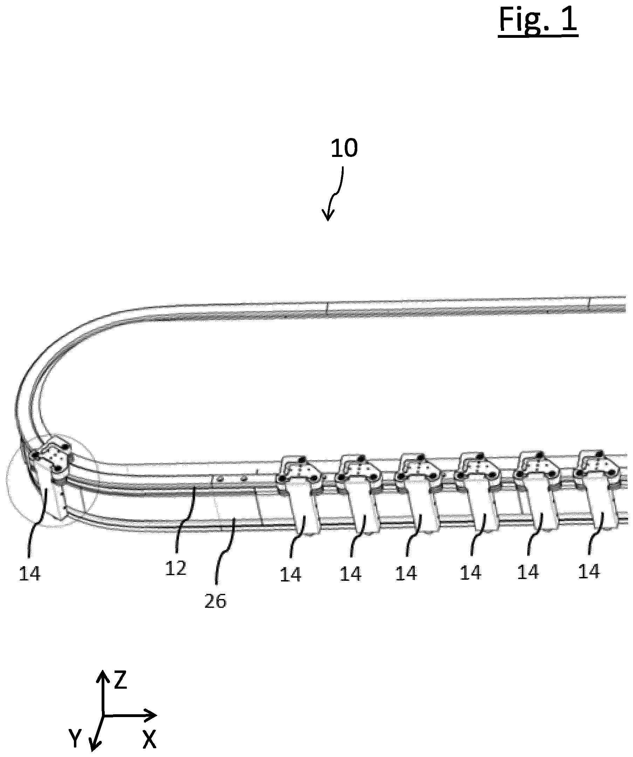

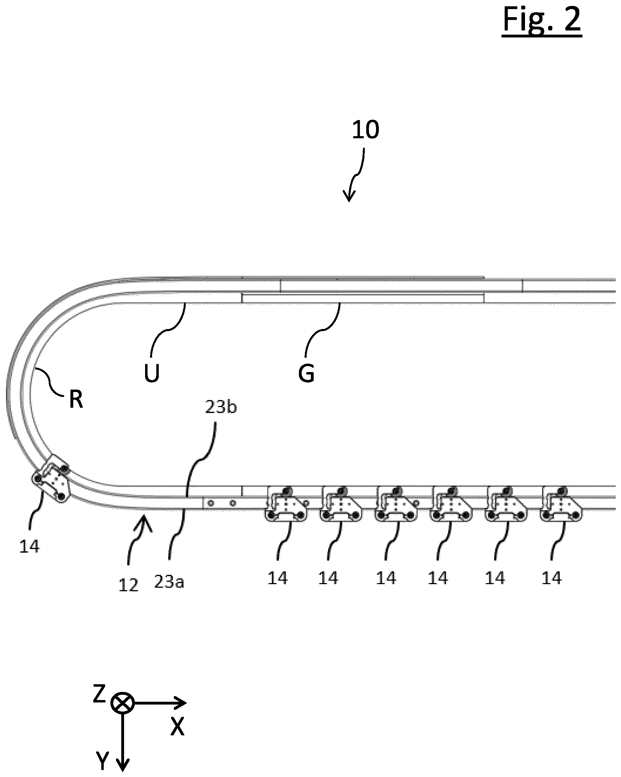

Das in den Fig. 1 und 2 dargestellte Transportsystem 10 weist eine Transportschiene 12 mit seitlichen Laufflächen 23a, 23b auf, entlang derer ein oder mehrere Transportwagen 14 in einer Transportrichtung X verfahren werden können. Der Einfachheit halber wird das System 10 nur teilweise dargestellt. Für das Verständnis der vorliegenden Erfindung nicht erforderliche Bestandteile wurden weggelassen.

Im vorliegenden Ausführungsbeispiel weist das Transportsystem 10 Abschnitte G mit einem geradlinigen Transportweg auf, die über Übergangsabschnitte U in Kurvenabschnitte R übergehen, die einen konstanten Krümmungsradius aufweisen. Es versteht sich, dass abweichend von dem dargestellten Beispiel Transportschienen mit beliebiger Streckenführung realisiert werden können.

Entlang des durch die Transportschiene 12 festgelegten Transportweges können beispielsweise Bearbeitungsstationen vorgesehen sein, an denen auf den Transportwagen 14 angeordnete Werkstücke bearbeitet werden können. Es versteht sich, dass der Aufbau modular sein kann, sodass einzelne Module mit bestimmten Längen und/oder bestimmten Krümmungsradien auf einfache Weise miteinander kombiniert werden können, um ein Transportsystem mit der gewünschten Konfiguration zu erhalten.

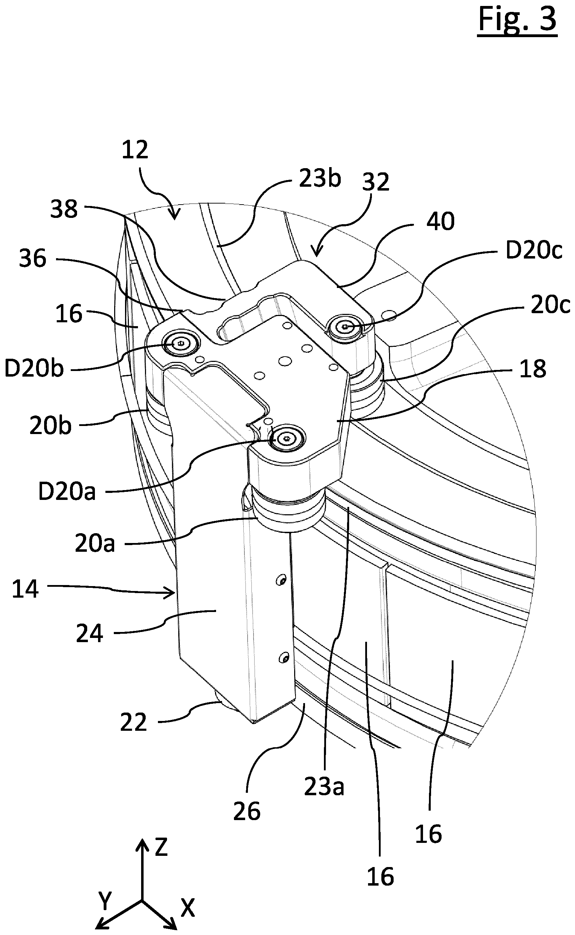

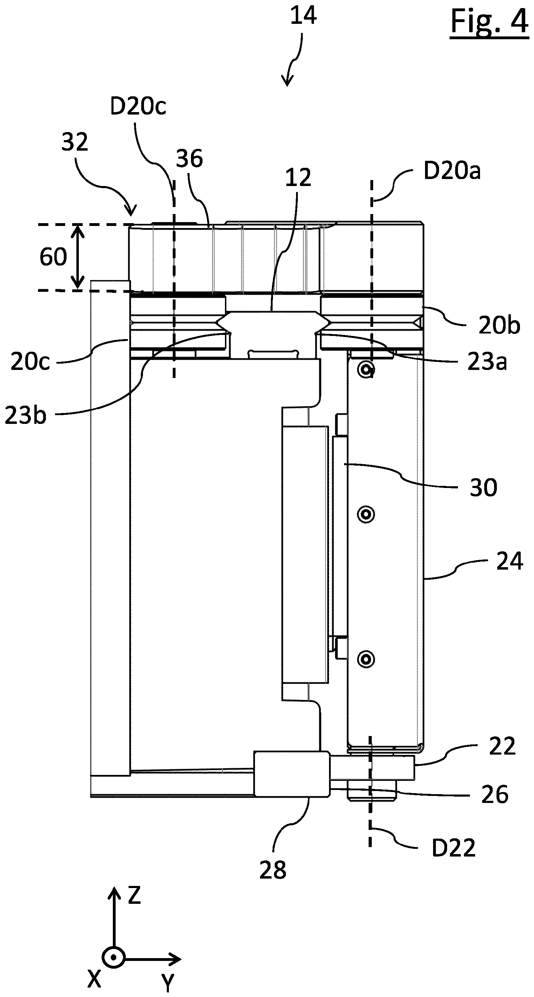

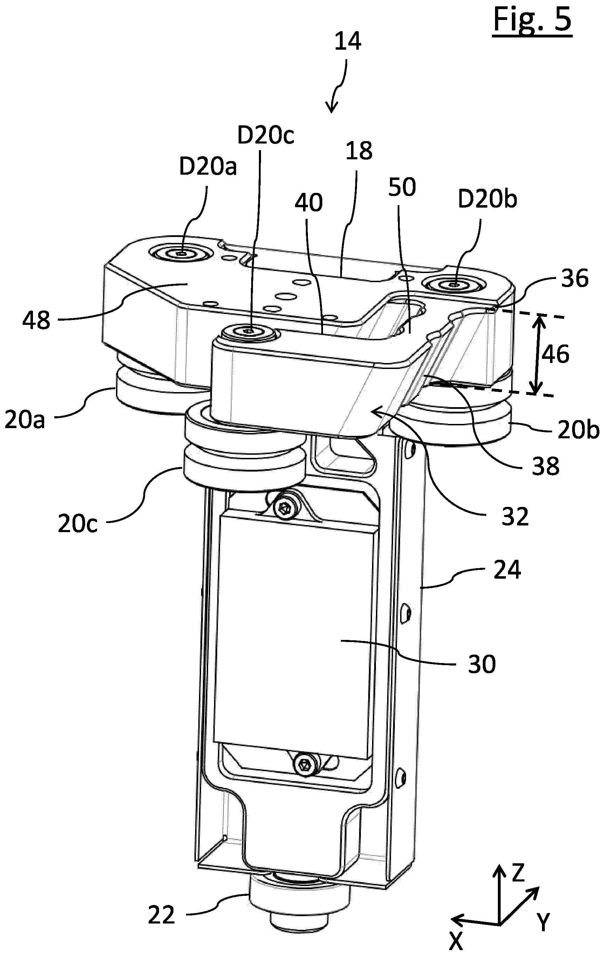

Fig. 3 zeigt eine perspektivische Ansicht eines Ausschnitts des Kurvenabschnitts R mit einem Transportwagen 14. Der Antrieb des Transportwagens 14 erfolgt durch einen Linearmotor, der in Längsrichtung der Transportschiene 12 hintereinander angeordnete Statoreinheiten 16 aufweist, die mit einer an dem Transportwagen 14 angeordneten Läufereinheit 30 (nicht zu sehen, siehe Fig. 4 und 5) zusammenwirkt. Die Statoreinheiten 16 liegen zwischen der Schienen 12 und einer Stützschiene 28. Die Läufereinheit 30 kann eine Permanentmagnetanordnung umfassen. Durch eine entsprechende Ansteuerung der Einheiten 16 werden sich in Transportrichtung und zeitlich veränderliche Magnetfelder erzeugt, die den Wagen 14 zu einer Bewegung entlang der Transportschiene 12 antreiben. Derartige Linearmotoren sind grundsätzlich bekannt.

Der Transportwagen 14 umfasst einen Grundkörper 18, an dem eine erste Laufrolle 20a und eine zweite Laufrolle 20b gelagert sind. Sie sind relativ zu dem Grundkörper 18 räumlich fixiert. Die Laufrollen 20a, 20b wirken mit der an einer Seite der Transportschiene 12 angeordneten Lauffläche 23a zusammen. Wie in der Seitenansicht von Fig. 4 zu sehen ist, weist die Lauffläche 23a in einem Querschnitt eine Keilform auf, die in entsprechende Keilnuten der Laufrollen 20a, 20b eingreift. Auch die Lauffläche 23b weist eine Keilform auf. Diese greift in eine Keilnut einer weiteren Laufrolle 20c ein, die der gegenüberliegenden Seite der Transportschiene 12 zugeordnet ist und die mit der Lauffläche 23b zusammenwirkt. Die Anordnung der Laufrolle 20c wird nachfolgend näher anhand der Fig. 4 bis 7 beschrieben.

Die vorstehend beschriebene Läufereinheit 30 des Transportwagens 14 ist an einem Trägerabschnitt 24 angeordnet, der sich senkrecht von dem Grundkörper 18 nach unten erstreckt. Aufgrund der bei Betrieb des Linearmotors zwischen der Läufereinheit 30 und den Statoreinheiten 16 auftretenden Kräften entstehen Kippmomente, die auf den Grundkörper 18 und dessen Führung an der Transportschiene 12 wirken. Um diese Kippmomente aufzunehmen, ist an dem freien Ende des Trägerabschnitts 24 eine weitere Laufrolle 22 vorgesehen, die mit einer Lauffläche 26 der Stützschiene 28 zusammenwirkt.

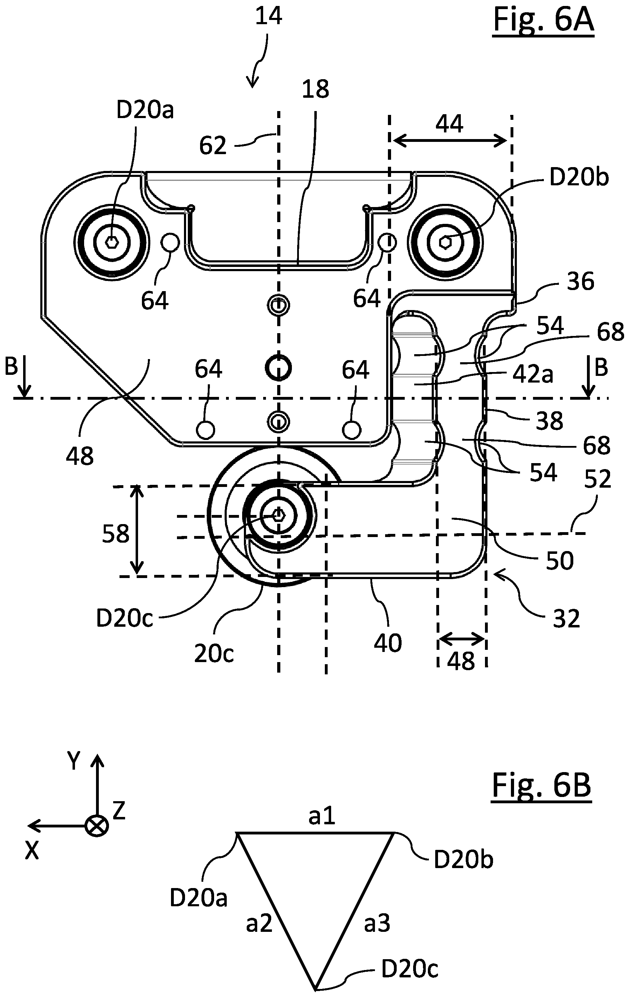

Die Drehachsen D20a, D20b, D20c und D22 der Laufrollen 20a, 20b, 20c und 22 sind parallel angeordnet. Insbesondere verlaufen die Drehachsen D20a, D20b, D20c und D22 parallel zur axialen Richtung Z. Zudem bilden die Drehachsen D20a, D20b und D20c der Laufrollen 20a, 20b und 20c ein gleichschenkliges Dreieck, das heißt ein Abstand a1 zwischen den Drehsachsen D20a und D20b ist gleich einem Abstand a2 zwischen den Drehsachsen D20a und D20c, welcher wiederum gleich einem Abstand a3 zwischen den Drehsachsen D20b und D20c ist (siehe Fig. 6B, a1 = a2 = a3). Diese Beziehung gilt in einem Zustand, in dem der Transportwagen 14 nicht auf der Schiene 12 montiert ist, das heißt der Ausleger 32 wird bei der Montage des Transportwagens 14 auf die Schiene 12 verspannt. Die Vorspannung beträgt beispielsweise ca. 0,1 mm +/- 10%.

Die Anordnung und Ausgestaltung der Laufrolle 22 kann bedarfsgerecht gewählt werden. Es ist beispielsweise zusätzlich oder alternativ möglich, eine Laufrollen 22 vorzusehen, deren Drehachse D22 senkrecht zu denen der Laufrollen 20a, 20b, 20c ausgerichtet ist, beispielsweise um vertikal wirkende Kräfte aufzunehmen. Es ist auch denkbar, mehrere Laufrollen 22 mit parallelen oder unterschiedlich ausgerichteten Drehachsen vorzusehen.

Fig. 5 zeigt eine Perspektivansicht des Transportwagens 14. Im vorliegenden Ausführungsbeispiel weist die Laufrolle 22 im Gegensatz zu den Laufrollen 20a, 20b, 20c keine Keilnut auf. Entsprechend ist die Lauffläche 26 der Stützschiene 28 eben und nicht keilförmig (siehe Fig. 4).

Neben den drehbar aber räumlich fest an dem Grundkörper 18 angeordneten Laufrollen 20a und 20b trägt der Grundkörper 18 eine weitere Laufrolle 20c, die mit der der Lauffläche 23a gegenüberliegenden Lauffläche 23b der Transportschiene 12 zusammenwirkt. Anders als die Laufrollen 20a, 20b ist die Laufrolle 20c allerdings relativ zu dem Grundkörper 18 beweglich, da sie an einem Ausleger 32 mit einem elastischen Festkörpergelenk 38 angeordnet ist. Die Laufrolle 20c ist derart an dem Ausleger 32 angeordnet, dass sie unter Vorspannung an die Lauffläche 20c gedrückt wird, das heißt die Transportschiene 12 ist zwischen der Laufrolle 20c auf der einen Seite und den Laufrollen 20a und 20b auf der anderen Seite eingeklemmt.

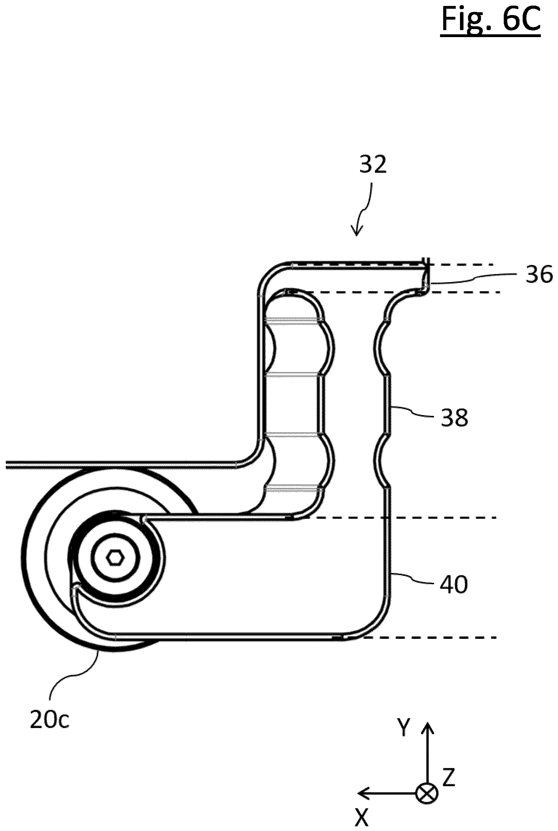

Wie in der Fig. 6A gut zu erkennen ist, weist der Ausleger 32 einen Basisabschnitt 36 auf, der sich an den Grundkörper 18 anschließt (siehe auch Fig. 6C). In dem gezeigten Ausführungsbeispiel ist der Basisabschnitt 36 im Bereich der zweiten Laufrolle 20b angeordnet, das heißt der Basisabschnitt 36 schließt sich an einen Abschnitt des Grundkörpers 18 an, an dem die zweite Laufrolle 20b angeordnet ist. Zudem ist der Basisabschnitt 26 in der Querrichtung Y seitlich versetzt in Bezug auf die dritte Laufrolle 20c angeordnet. Unter der Querrichtung Y ist eine Richtung zu verstehen, die senkrecht zu der Transportrichtung X und senkrecht zu der axialen Richtung Z verläuft.

Ein Festkörpergelenk 38 des Auslegers 32 erstreckt sich in der Querrichtung Y von dem Basisabschnitt 36 bis knapp über den Grundkörper 18 (siehe auch Fig. 6C). Das Festkörpergelenk 38 weist eine erste Biegesteifigkeit in der Transportrichtung X und eine zweite Biegesteifigkeit in der axialen Richtung Z auf, die größer als die erste Biegesteifigkeit ist. Insbesondere lässt sich das Festkörpergelenk 38 in der axialen Richtung Z viel weniger leicht verbiegen als in der Transportrichtung X.

Ein Endabschnitt 40 des Auslegers 32 erstreckt sich in der Transportrichtung X von dem Festkörpergelenk 38 bis knapp über eine Mittenachse 62 des Grundkörpers 18, die parallel zur Querrichtung Y verläuft. Die Laufrolle 20c ist an einem freien Ende des Endabschnitts 40 angeordnet (siehe auch Fig. 6C). Die Drehachse D20c der Laufrolle 20c ist seitlich versetzt in Bezug auf eine Mittenachse 52 des Endabschnitts 40 angeordnet, die parallel zur Transportrichtung X verläuft. Die Drehachse D20c der Laufrolle 20c liegt zudem auf der Mittenachse 62 des Grundkörpers 18, das heißt die Laufrolle 20c und der Grundkörper 18 liegen in der Transportrichtung X gesehen auf gleicher Höhe. Es versteht sich, dass die Drehachse D20c nicht auf der Mittenachse 62 des Grundkörpers 18 liegen muss und auch nicht seitlich versetzt in Bezug auf die Mittenachse 52 des Endabschnitts 40 angeordnet sein muss, wenn es der Optimierung des Transportwagens an das jeweils vorliegende Anforderungsprofil dient.

Gemäß einer weiteren, nicht gezeigten Ausführungsform schließt sich der Basisabschnitt 36 an einen Abschnitt des Grundkörpers 18 an, an dem die Laufrolle 20a angeordnet ist. Der Endabschnitt 40 erstreckt sich bei dieser Ausführungsform entgegen der Transportrichtung X von dem Festkörpergelenk 38.

Das Festkörpergelenk 38 ist dünner als der Basisabschnitt 36 und der Endabschnitt 40. Insbesondere ist eine Breite 48 des Festkörpergelenks 38 in der Transportrichtung X kleiner als eine Breite 44 des Basisabschnitts 36 in der Transportrichtung X und kleiner als eine Breite 58 des Endabschnitts 40 in der Querrichtung Y.

Wie in den Fig. 4, 5 oder 7A zu sehen ist, ist das Festkörpergelenk 38 so dick wie der Basisabschnitt 36 und der Endabschnitt 40. Insbesondere ist eine Dicke 56 des Festkörpergelenks 38 gleich einer Dicke 46 des Basisabschnitts 36 und gleich einer Dicke 60 des Endabschnitts 40. Die jeweiligen Dicken 56, 46, 60 beziehen sich auf Dicken in der axialen Richtung Z. Es versteht sich, dass das Festkörpergelenk 38 der Basisabschnitt 36 und/oder der Endabschnitt 40 aber auch unterschiedliche Dicken aufweisen können. Beispielsweise ist es denkbar, dass das Festkörpergelenk 38 dünner als der Basisabschnitt 36 und/oder der Endabschnitt 40 ist. Ein Verhältnis zwischen der Breite 48 des Festkörpergelenks 38 und der Dicke 56 des Festkörpergelenks 38 beträgt jedoch mindestens 1,5:1, bevorzugt mehr 2:1, besonders bevorzugt mehr 2,5:1, beispielsweise 2,65:1.

In dem gezeigten Ausführungsbeispiel sind der Ausleger 32 und der Grundkörper 18 einstückig ausgebildet. Der Grundkörper 18 und der Ausleger 32 sind beispielsweise aus demselben Werkstück ausgefräst, was besonders wirtschaftlich ist. Der Grundkörper 18 und der Ausleger 32 können aber auch auf Basis eines Gussverfahrens hergestellt sind. Der Grundkörper 18 und der Ausleger 32 stellen beispielsweise ein Aluminiumgussteil dar, welches nachbearbeitet werden kann. Auch diese Herstellungsmethode zeichnet sich durch besonders geringe Kosten aus, und zwar ohne dass dabei die technischen Eigenschaften des Transportwagens 14 beeinträchtigt werden.

Es ist jedoch auch möglich, dass der Ausleger 32 ein separates Bauteil ist, welches an den Grundkörper 18 montiert ist, beispielsweise mittels einer Schraub- und/oder Schweißverbindung.

Der Ausleger 32 kann - anders als im gezeigten Ausführungsbeispiel - auch aus mehreren, miteinander verbundenen Bauteilen bestehen. Zum Beispiel kann das Festkörpergelenk 38 aus einem flexibleren Material als der Basisabschnitt 36 und der Endabschnitt 40 ausgebildet sein.

Wie insbesondere in der Fig. 6A zu erkennen ist, umfasst der Grundkörper 18 eine Kopplungsfläche 48, die mit einem Objektträger zur Aufnahme zumindest eines zu transportierenden Objekts koppelbar ist. In dem gezeigten Ausführungsbeispiel sind in der Kopplungsfläche 48 Montagelöcher 64 vorgesehen, die dazu ausgebildet sind, Schrauben und/oder Nuten des Objektträgers aufzunehmen (siehe Fig. 6). Es sind jedoch auch andere gängige Befestigungsmöglichkeiten denkbar, beispielsweise eine Nut/Feder-Verbindung oder dergleichen.

Der Ausleger 32 weist eine objektseitige Gelenkfläche 50 auf, die von der Seite betrachtet, das heißt in der Transportrichtung X oder der Querrichtung Y betrachtet, parallel versetzt zu der Kopplungsfläche 48 liegt, um genügend Spiel zwischen dem Ausleger 32 und dem Objektträger, insbesondere zwischen der in der Querrichtung Y auslenkbaren Laufrolle 20c und dem Objektträger, zu gewährleisten. Es ist jedoch auch denkbar, dass die Kopplungsfläche 48 und die Gelenkfläche 50 im Wesentlichen auf gleicher axialer Höhe liegen.

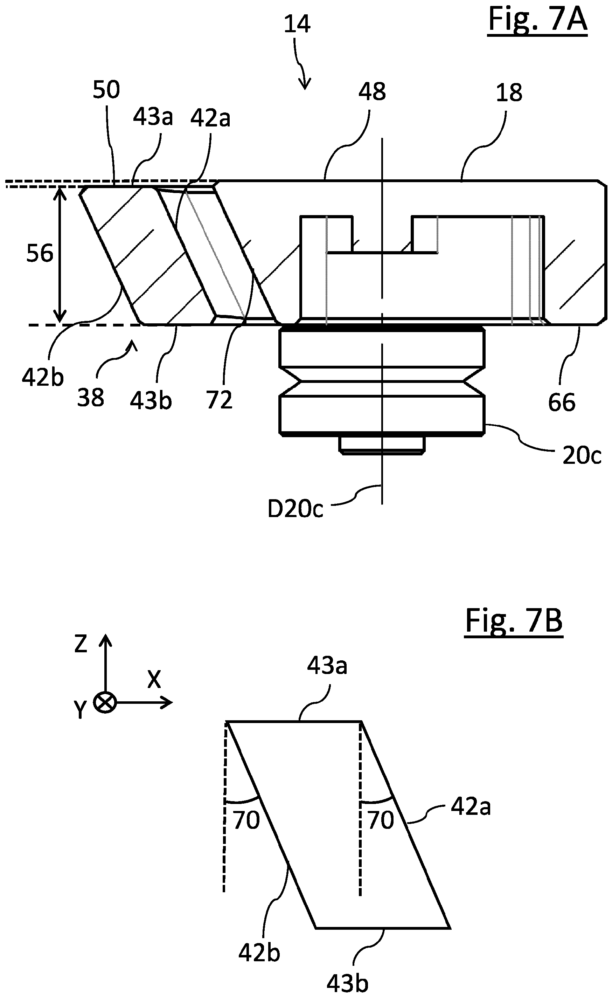

Die Fig. 7A zeigt eine Schnittansicht eines erfindungsgemäßen Transportwagens 14 entlang der in der Fig. 6A eingezeichneten Schnittlinie B-B. Wie in der Fig. 7A zu sehen ist, umfasst das Festkörpergelenk 38 eine dem Grundkörper 18 gegenüberliegende, in Bezug auf die axiale Richtung Z geneigte Seitenflächen 42a, und eine dem Grundkörper 18 abgewandte, ebenfalls in Bezug auf die axiale Richtung Z geneigte Seitenflächen 42b. Das Festkörpergelenk 38 umfasst des Weiteren eine Oberseitenfläche 43a, welche einen Abschnitt der Gelenkfläche 50 darstellt, und eine Unterseitenfläche 43b. Die Oberseitenfläche 43a und die Unterseitenfläche 43b liegen in parallelen Ebenen, die jeweils senkrecht zur axialen Richtung Z verlaufen. Die Unterseitenfläche 43b fluchtet mit einer Unterseite 66 des Grundkörpers 18, während die Oberseitenfläche 43a von der Seite betrachtet tiefer als die Kopplungsfläche 48 des Grundkörpers 18 liegt. Die Unterseite 66 des Grundkörpers 18 ist parallel zu der Kopplungsfläche 48 ausgebildet. Es versteht sich, dass auch nur eine der Seitenflächen 42a, 42b geneigt sein kann, und dass die Unterseitenfläche 43b nicht mit einer Unterseite 66 des Grundkörpers 18 fluchten muss.

Wie insbesondere in der Fig. 7B zu sehen ist, die schematisch den Querschnitt des Festkörpergelenks 38 wiedergibt, weist das Festkörpergelenk 38 in einem Querschnitt in einer Ebene, die durch die Transportrichtung X und die axiale Richtung Z aufgespannt wird, die Form eines geneigten Parallelogramms auf. Insbesondere sind jeweils zwei parallelen Seiten des Parallelogramms, welche jeweils den Flächen 42a und 42b sowie die Flächen 43a und 43b zugeordnet sind, gleich lang.

Das Parallelogramm ist in Richtung des Grundkörpers 18 geneigt. Ein Neigungswinkel 70 der Seitenflächen 42a und 42b in Bezug auf die axiale Richtung Z kann zum Beispiel zwischen 45° und 5°, insbesondere zwischen 40° und 10°, insbesondere zwischen 35° und 15°, insbesondere zwischen 30° und 20°, liegen. Der Grundkörper 18 weist eine dem Festkörpergelenk 38 gegenüberliegende Seitenfläche 72 auf, die denselben Neigungswinkel 70 wie die dem Grundkörper 18 gegenüberliegende Seitenfläche 42a und/oder die dem Grundkörper 18 abgewandte Seitenfläche 42b aufweist (siehe Fig. 7A).

Wieder zurückkommend auf Fig. 6A weist jede Seitenfläche 42a, 42b des Festkörpergelenks 38 zwei parallele, zueinander beabstandete Ausnehmungen oder Rillen 54 auf, wobei jeweils zwei gegenüberliegende Ausnehmungen 54 eine Einschnürung 68 bilden. Jede Ausnehmungen 54 erstreckt sich vollständig entlang der jeweiligen Seitenfläche 42a, 42b. Es versteht sich, dass auch nur eine der Seitenflächen 42a, 42b eine oder zwei Ausnehmungen 54 aufweisen kann. Alternativ können auch mehr als zwei, beispielsweise drei Ausnehmungen 54 in einer oder beiden Seitenflächen 42a, 42b vorgesehen sein. Zudem kann sich eine Ausnehmungen 54 auch nur abschnittsweise entlang einer Seitenfläche 42a, 42b erstrecken. Zudem ist es denkbar, dass auch die Oberseitenfläche 43a und/oder die Unterseitenfläche 43b eine oder mehrere Ausnehmungen aufweist, beispielsweise an der Stelle der Einschnürungen 68.

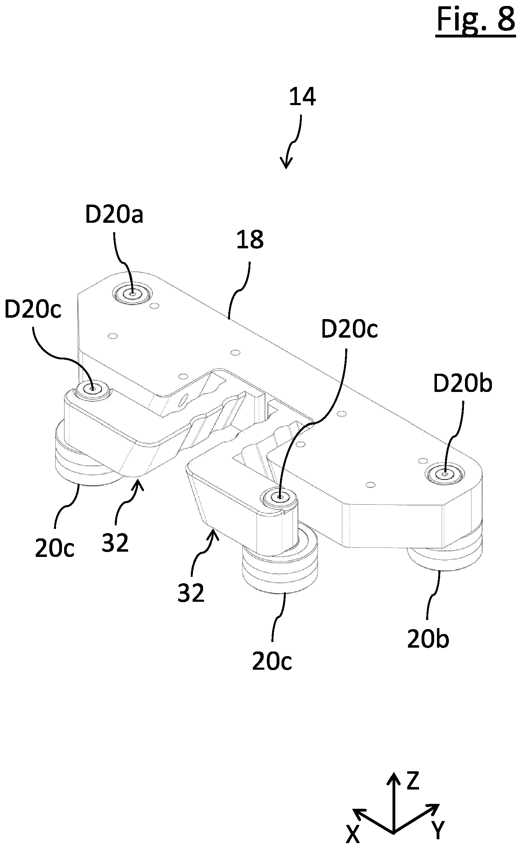

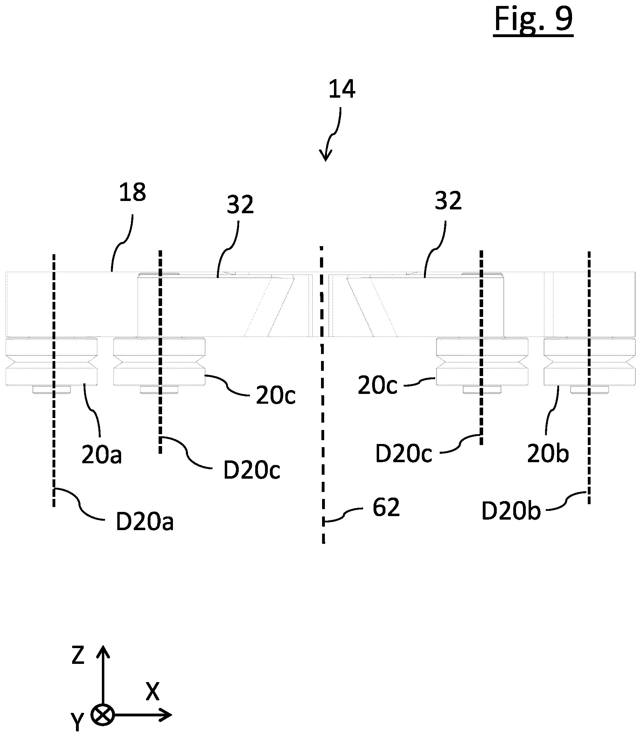

Gemäß einer weiteren, in den Fig. 8 und 9 gezeigten Ausführungsform erstrecken sich zwei Ausleger 32 von dem Grundkörper 18, die jeweils einen Endabschnitt 40 mit einer Laufrolle 20c aufweisen, die mit der Lauffläche 23b zusammenwirken. Bei dieser Ausführungsform fluchten die zwei Endabschnitte 40 der zwei Ausleger 32 und weisen in entgegengesetzte Richtungen (insbesondere entlang und entgegen der Transportrichtung X), sodass die zwei Laufrollen 20c in der Transportrichtung X zueinander beabstandet angeordnet sind. Die beiden Ausleger 32 können wie in Bezug auf die Ausführungsform beschrieben wurde, bei der nur ein Ausleger 32 vorgesehen ist, ausgebildet sein.

Der erfindungsgemäße Ausleger 32 mit elastisch verformbarem Festkörpergelenk 38 weist eine optimierte Formgebung auf, die in Zusammenspiel mit der Formgebung des Grundkörpers 18 eine hochgenaue Positionierung des Transportwagens 14 auf der Schiene 12 ermöglicht. Insbesondere wird aufgrund der Formgebung des Festkörpergelenks 38 (hohe Steifigkeit in axialer Richtung Z) quasi vollständig unterbunden, dass beim Bewegen des Transportwagens 14 entlang der Schiene 12 eine Verkippung der dritten Laufrolle 20c in Bezug auf den Grundkörper 18 erfolgt, während es eine Auslenkung der dritten Laufrolle 20c, insbesondere im Wesentlichen nur in der Querrichtung Y, ermöglicht, Fertigungstoleranzen effizient zu kompensieren. Solche Fertigungstoleranzen können beispielsweise Unebenheiten auf der Schienenoberfläche oder nicht-konstante Abstände zwischen den Laufflächen der Schiene 12 darstellen.

Darüber hinaus wird durch die aufgrund der Ausgestaltung des Festkörpergelenks 38 genau definierte Auslenkbarkeit der dritten Laufrolle 20c eine hervorragende Kurvengängigkeit des Transportwagens 14 erreicht.

Gleichzeitig stellt die durch den Ausleger 32 bereitgestellte Vorspannkraft sicher, dass der Transportwagens 14 auch bei höheren zu transportierenden Lasten sicher auf der Schiene 12 gelagert ist und schlupffrei arbeitet.

Zudem ist der erfindungsgemäße Ausleger 32 vergleichsweise wenig komplex und daher besonders wirtschaftlich und robust. Über den Lebenszyklus des Transportwagens bleiben die Eigenschaften des Festkörpergelenks dabei im Wesentlichen konstant. Des Weiteren erhöht auch die vergleichsweise geringe Anzahl an separaten, beweglichen Teilen die Positionierungsgenauigkeit des Transportwagens 14.

Vorstehend wurde eine Ausführungsform des Transportsystems mit einem Linearmotor (Statoreinheit 16, Läufereinheiten 30) beschrieben. Es versteht sich aber, dass alternative Antriebskonzepte (z.B. Bandantrieb, Kurvenantrieb) vorgesehen sein können. Auch eine Kombination unterschiedlicher Antriebskonzepte ist denkbar.

### Bezugszeichenliste:

- 10: Transportsystem
- 12: Transportschiene
- 14: Transportwagen
- 16: Statoreinheit
- 18: Grundkörper
- 20a-20c, 22: Laufrollen
- 23a, 23b, 26: Laufflächen
- 24: Trägerabschnitt
- 28: Stützschiene
- 30: Läufereinheit
- 32: Ausleger
- 36: Basisabschnitt
- 38: Festkörpergelenk
- 40: Endabschnitt
- 42a, 42b: Seitenflächen des Festkörpergelenks
- 43a, 43b: Ober- und Unterseitenfläche Festkörpergelenks
- 44: Breite des Basisabschnitts
- 46: Dicke des Basisabschnitts
- 48: Kopplungsfläche
- 50: Gelenkfläche
- 52: Mittenachse des Endabschnitts
- 54: Ausnehmung
- 56: Dicke des Festkörpergelenks
- 58: Breite des Endabschnitts
- 60: Dicke des Endabschnitts
- 62: Mittenachse des Grundkörpers
- 64: Montagelöcher
- 66: Unterseite des Grundkörpers
- 68: Einschnürung
- 70: Neigungswinkel
- 72: geneigte Seitenfläche des Grundkörpers
- D20a-D20c, D22: Drehachsen
- X: Transportrichtung
- Y: Querrichtung
- Z: axiale Richtung

## Patentansprüche

1. Transportsystem (10) zum Transport von Objekten mit zumindest einer Transportschiene (12), die zumindest eine erste Lauffläche (23a) und eine zweite Lauffläche (23b) aufweist, die einander gegenüberliegend angeordnet sind, und mit zumindest einem Transportwagen (14) umfassend:
einen Grundkörper (18) mit einer Kopplungsfläche (48), die mit einem Objektträger zur Aufnahme zumindest eines zu transportierenden Objekts gekoppelt oder koppelbar ist;
zumindest eine um eine erste Drehachse (D20a) drehbar gelagerte erste Laufrolle (20a) und zumindest eine um eine zweite Drehachse (D20b) drehbar gelagerte zweite Laufrolle (20b), wobei die erste und die zweite Laufrolle (20a) derart an dem Grundkörper (18) angeordnet sind, dass die erste und die zweite Drehachse (D20a, D20b) relativ zu dem Grundkörper (18) ortsfest sind und dass sie mit der ersten Lauffläche (23a) zusammenwirken, wobei die erste und die zweite Drehachse (D20a, D20b) eine axiale Richtung (Z) definieren, die senkrecht zu einer Transportrichtung (X) des Transportwagens (14) steht; und
zumindest eine um eine dritte Drehachse (D20c) drehbar gelagerte dritte Laufrolle (20c), die an einem Ausleger (32) angeordnet ist, der einen mit dem Grundkörper (18) verbundenen Basisabschnitt (36), ein sich an den Basisabschnitt (36) anschließendes elastisch wirkendes Festkörpergelenk (38) und einen sich an das Festkörpergelenk (38) anschließenden Endabschnitt (40) aufweist, wobei die dritte Laufrolle (20c) an dem Endabschnitt (40) angeordnet ist,
wobei das Festkörpergelenk (38) zumindest in der Transportrichtung (X) eine geringere Biegesteifigkeit als der Basisabschnitt (36) und/oder der Endabschnitt (40) aufweist, und
wobei der Ausleger (32), insbesondere das Festkörpergelenk (38) derart ausgestaltet und angeordnet ist, dass die dritte Laufrolle (20c) mit einer Vorspannung gegen die zweite Lauffläche (23b) gedrückt wird.

2. Transportsystem (10) nach Anspruch 1,
wobei das Festkörpergelenk (38) eine erste Biegesteifigkeit in der Transportrichtung (X) und eine zweite Biegesteifigkeit in der axialen Richtung (Z) aufweist, wobei die erste Biegesteifigkeit kleiner als die zweite Biegesteifigkeit ist, insbesondere wobei die zweite Biegesteifigkeit mehr als 300%, bevorzugt mehr als 400%, insbesondere mehr als 500%, größer ist als die erste Biegesteifigkeit ist.

3. Transportsystem (10) nach zumindest einem der vorherigen Ansprüche, wobei sich der Endabschnitt (40) im Wesentlichen parallel zu der Transportrichtung (X) erstreckt.

4. Transportsystem (10) nach zumindest einem der vorherigen Ansprüche, wobei sich das Festkörpergelenk (38) im Wesentlichen parallel zu einer Querrichtung (Y) erstreckt, die senkrecht zu der Transportrichtung (X) und senkrecht zu der axialen Richtung (Z) steht.

5. Transportsystem (10) nach zumindest einem der vorherigen Ansprüche, wobei der Basisabschnitt (36) in einer Querrichtung (Y) senkrecht zu der Transportrichtung (X) und senkrecht zu der axialen Richtung (Z) seitlich versetzt in Bezug auf die dritte Laufrolle (20c) angeordnet ist.

6. Transportsystem (10) nach zumindest einem der vorherigen Ansprüche, wobei der Basisabschnitt (36) eine Breite (44) in der Transportrichtung (X) und eine Dicke (46) in der axialen Richtung (Z) aufweist, wobei das Festkörpergelenk (38) eine Breite (48) in der Transportrichtung (X) und eine Dicke (56) in der axialen Richtung (Z) aufweist, wobei der Endabschnitt (40) eine Breite (58) in einer Querrichtung (Y) senkrecht zu der axialen Richtung (Z) und der Transportrichtung (X) und eine Dicke (60) in der axialen Richtung (Z) aufweist,
wobei das Festkörpergelenk (38) zumindest abschnittsweise eine kleinere Breite (48) und/oder Dicke (56) als der Basisabschnitt (36) und/oder der Endabschnitt (40) aufweist.

7. Transportsystem (10) nach zumindest einem der vorherigen Ansprüche, wobei das Festkörpergelenk (38) zwei Seitenflächen (42) umfasst, wobei zumindest eine, bevorzugt beide, der Seitenflächen (42) in Bezug auf die axiale Richtung (Z) geneigt ist,
insbesondere wobei das Festkörpergelenk (38) in einem Querschnitt in einer Ebene, die durch die Transportrichtung (X) und die axiale Richtung (Z) aufgespannt wird, zumindest abschnittsweise die Form eines geneigten Parallelogramms aufweist.

8. Transportsystem (10) nach zumindest einem der vorherigen Ansprüche, wobei das Festkörpergelenk (38), bevorzugt zumindest eine Seitenfläche (42) des Festkörpergelenks (38), zumindest eine Ausnehmung (54) aufweist, wobei sich die Ausnehmung (54) zumindest abschnittsweise, bevorzugt vollständig, entlang der Seitenfläche (42) erstreckt,
insbesondere wobei jede Seitenfläche (42) zwei parallele, zueinander beabstandete Ausnehmungen (54) aufweist, die sich jeweils vollständig entlang der jeweiligen Seitenfläche (42) erstrecken.

9. Transportsystem (10) nach zumindest einem der vorherigen Ansprüche, wobei der Ausleger (32) eine dem Objekt zugewandte Gelenkfläche (50) aufweist, insbesondere wobei die Abschnitte (36, 38, 40) des Auslegers (32) eine gemeinsame, dem Objekt zugewandte Gelenkfläche (50) aufweisen,
wobei die Gelenkfläche (50) und die Kopplungsfläche (48) parallele Ebenen sind oder in derselben Ebene liegen, insbesondere wobei in einer Gebrauchslage des Transportwagens (14) in einer Richtung (X, Y) senkrecht zu der axialen Richtung gesehen die Gelenkfläche (50) unterhalb der Kopplungsfläche (48) liegt.

10. Transportsystem (10) nach zumindest einem der vorherigen Ansprüche, wobei die dritte Drehachse (D20c) seitlich versetzt in Bezug auf eine Mittenachse (52) des Endabschnitts (40) an dem Endabschnitt (40) angeordnet ist.

11. Transportsystem (10) nach zumindest einem der vorherigen Ansprüche, wobei der Ausleger (32) einstückig ausgebildet ist.

12. Transportsystem (10) nach zumindest einem der vorherigen Ansprüche, wobei der Ausleger (32) und der Grundkörper (18) einstückig ausgebildet sind.

13. Transportsystem (10) nach zumindest einem der vorherigen Ansprüche, wobei in der axialen Richtung gesehen die Drehachsen (D20a, D20b, D20c) der Laufrollen (20a, 20b, 20c) ein gleichschenkliges Dreieck bilden.

14. Transportsystem (10) nach zumindest einem der vorherigen Ansprüche, wobei sich von dem Grundkörper (18) zumindest ein Trägerabschnitt (24) in der axialen Richtung (Z) erstreckt, der zumindest eine um eine vierte Drehachse (D22) drehbar gelagerte vierte Laufrolle (22) trägt, insbesondere wobei die vierte Laufrolle (22) an einem freien Ende des Trägerabschnitts (24) angeordnet ist, insbesondere wobei die vierte Drehachse (D22) parallel zu der der ersten, der zweiten und/oder der dritten Drehachse (D20a, D20b, D20c) angeordnet ist.

15. Transportsystem (10) nach zumindest einem der vorherigen Ansprüche, wobei der Transportschiene (12) eine Mehrzahl von in der Transportrichtung (X) hintereinander angeordneten Statoreinheiten (16) zugeordnet ist, die zusammen mit einer an dem zumindest einen Transportwagen (14) angeordneten Läufereinheit (30) einen Linearmotor bilden, mittels dem der zumindest eine Transportwagen (14) entlang der Transportschiene (12) bewegbar ist, insbesondere wobei die Läufereinheit (30) an dem Trägerabschnitt (24) angeordnet ist, insbesondere wobei die Läufereinheit (30) zwischen dem Grundkörper (18) und der vierten Laufrolle (22) angeordnet ist.
